# EUROPEAN PATENT APPLICATION

(11) **EP 4 738 102 A1**
(43) Date of publication of application: **06.05.2026**
(21) Application number: 25211168.7
(22) Date of filing: 24.10.2025
(51) Int. Cl.: G06F 8/38, G06F 9/451, G06N 3/0475, G06N 20/00

(54) **RENDERING GUI COMPONENTS FOR REFINING QUERIES TO GENERATIVE MACHINE LEARNING MODELS**

(30) Priority: 31.10.2024 US 202418934192
(71) Applicant: Microsoft Technology Licensing LLC, Redmond, WA 98052-6399 (US)
(72) Inventor: WILLIAMS, John Herbert Martin, Redmond, 98052-6399 (US); DROSOS, Ian Zachariah, Redmond, 98052-6399 (US); SARKAR, Advait, Redmond, 98052-6399 (US); WILSON, Nicholas Charles, Redmond, 98052-6399 (US)
(74) Representative: Page White Farrer

(57) **Abstract**

A computer-implemented method includes receiving (S1001) an output from a generative machine learning model (300). The output includes a definition (1412) of a graphical user interface (GUI) component (610, 620, 630, 640) configured to receive user input for refining an input (211). The definition (1412) of the GUI component (610, 620, 630, 640) is according to a predefined schema. Based on the definition (1412), executable code (124) for rendering the GUI component (610, 620, 630, 640) is generated (S1002), and the code (124) is caused to be executed to render the GUI component (610, 620, 630, 640). The method provides a mechanism for rendering dynamically-generated GUI components for refining inputs to generative machine learning models.

## Description

### Background

In a wide range of settings, users are required to provide input queries to generative artificial intelligence (Al) models, such as Large Language Models (LLMs) or image generation models. Standalone interfaces for directly accessing such models to provide input and receive responses are commonplace, and exist in the form of web interfaces and mobile applications. An example is OpenAl^{®}'s ChatGPT interface.

Furthermore, interfaces that involve providing input queries to generative Al models are increasingly being incorporated into other applications, in the form of intelligent assistants. For example, many Microsoft^{®} applications include Copilot^{®} functionality.

### Summary

According to a first aspect of the disclosure, there is provided a computer-implemented method comprising: receiving, from a first generative machine learning model, an output comprising a definition of a graphical user interface (GUI) component configured to receive user input for refining an input, the definition of the GUI component being according to a predefined schema; generating, based on the definition of the GUI component, executable code for rendering the GUI component; and causing execution of the executable code to render the GUI component.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Nor is the claimed subject matter limited to implementations that solve any or all of the disadvantages noted herein.

### Brief Description of the Drawings

To assist understanding of the present disclosure and to show how embodiments may be put into effect, reference is made by way of example to the accompanying drawings in which:
FIG. 1 is a block diagram of an example system.
FIG. 2 is a block diagram illustrating an example options generator.
FIG. 3 is a schematic representation of the structure of an example prompt.
FIG. 4 is an example schema for defining a GUI component.
FIG. 5 a block diagram illustrating an example rendering engine.
FIG. 6 is a schematic representation of an example user interface.
FIG. 7 is a block diagram illustrating an example query executor.
FIG. 8 is a schematic representation of another example user interface.
FIG. 9 is a schematic representation of another example user interface.
FIG. 10 is a schematic flowchart of an example method.
FIG. 11 is a block diagram of an example computing system.

### Detailed Description

Generative models, when provided with input (e.g. an instruction or query), consume a significant amount of computing resource in generating a response. This is especially the case for large language models and the like, that may be executed on high-performance computing hardware. Typically, such models are hosted in remote environments, and accessible over a network connection, for example via an application programming interface (API), so that network resources are consumed by interacting with the model. However, providing suitable input to generative Al models that results in accurate responses may be difficult for users. For example, they may forget to include important instructions or context for getting accurate or informative responses, or they do not know exactly what they are looking for. This causes excessive use of computing resources, and excessive network communication.

To address these difficulties, the disclosure provides a means of dynamically generating graphical user interface, GUI, components based on an input, such as a query or instruction intended for input to a generative model. The GUI components comprise inputs for refining the input, allowing the user to select or provide appropriate inputs (e.g. radio buttons, check boxes, text boxes) to refine the input. The GUI components comprise inputs that are generated based on the input query. In other words, the options provided may be generated from, and specific to the input query. This increases the accuracy of the responses provided, and thus reduces the computational and network overhead caused by repeated queries.

In examples, a generative Al model is used in the process of generating the GUI components. Particularly, the input is provided to a generative model, along with instructions that cause the generative model to provide an output in the form of definitions of GUI components according to a predefined schema. In one step, this therefore provides both the refinement options for the query and suitable information for rendering the options. This reduces the computational and network resource consumption that would be associated with separately causing the model to generate the refinement options and then subsequently the code for rendering them. These definitions are then provided to a rendering engine, which is configured to interpret the GUI component definitions and generate corresponding executable code for rendering the GUI components. The code can then be executed to display the GUI components.

In examples, the user is then able to interact with the GUI components to select suitable refinement options for their input. The input and the selected options are then provided to a generative Al model (which may or may not be the same model that generated the definitions of the GUI components), for example in an input prompt. A response is received that is based on the input (e.g. provides an answer to a user query), taking into account the selected refinement options, which then is displayed to the user.

As discussed in further detail below, generating the GUI component definitions according to a predefined schema and providing a rendering engine that can interpret the definitions and accordingly render the components provides a number of advantages. Particularly, it provides a flexible framework, such that different rendering engines (e.g. web-based, mobile, computer operating system) can implement suitable techniques for rendering the definitions. Furthermore, it is less susceptible to error than having the generative Al directly generate executable code for rendering the GUI components. It therefore saves wasted resources in attempting to execute erroneous code. It also minimizes the number of potentially time-consuming and expensive calls to the model, in that both the options and the structured definition used for rendering them is returned in one response. In addition, it can enable incremental rendering of the GUI components, providing more responsiveness.

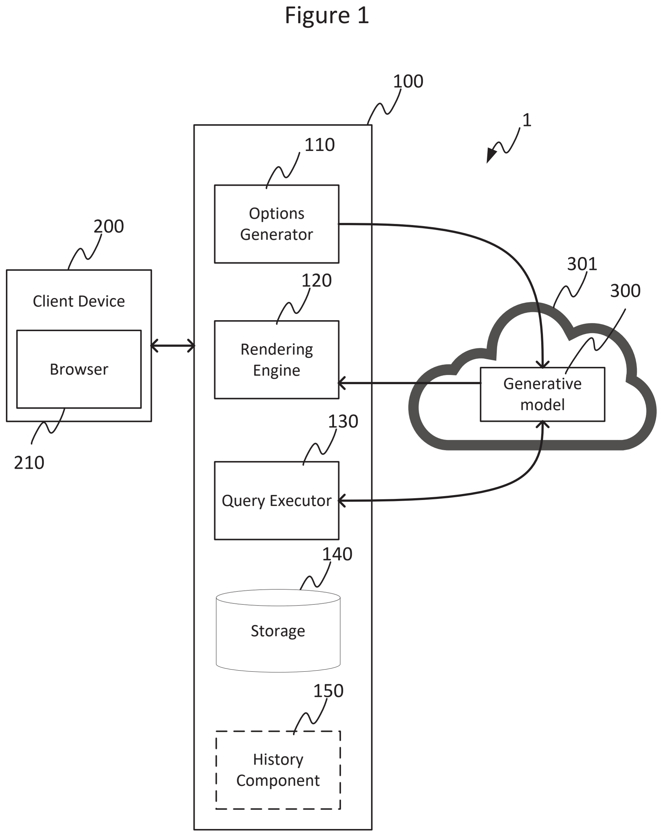

FIG. 1 is a schematic block diagram of an example environment 1 comprising a computer system 100 according to examples of the disclosure. The computer system 100 takes the form of a suitable server computer, which is configured to act as a web server. That is to say, the computer system 100 is configured to connect to a client device 200 over a suitable network connection, and in response to requests therefrom, serve webpages (amongst other data) that is displayed on the client device 200.

The client device 200 may take the form of any suitable computing device, including a personal computer, laptop computer, tablet computer, games console, smartphone or the like. The client device 200 includes a display for displaying a graphical user interface, and suitable input means (e.g. touch screen, mouse, keyboard etc). The detailed structure of an example client device 200 is discussed later.

The client device 200 comprises a web browser 210 that is configured to display the webpages served by the computer system 100. In one example, the web browser 210 is a separate application (e.g. Microsoft^{®} Edge^{®}, Google^{®} Chrome^{®}, Apple^{®} Safari^{®} etc) executable by the client device 200. Equally, the web browser 210 may be built into some other application.

The environment 1 further includes one or more generative Al models 300. The computer system 100 is furthermore configured to interface with the generative Al model 300.

An example of a generative Al model 300 is a Large Language Model (LLM). The LLM is a trained language model, based on the transformer deep learning network. The LLM is trained on a very large corpus (e.g., in the order of billions of tokens), and can generate text or data in response to receipt of an input in the form of a prompt.

An example of a suitable LLM is the Open Al General Pretrained Transformer (GPT) model, for example GPT-3, GPT-3.5 turbo or GPT-4. However, a variety of LLMsmay be employed in the alternative. Similarly, in some examples Small Language Models (SLMs) such as DistilBERT or Microsoft's Phi-3 may be employed.

The model 300 operates in a suitable computer system 301. For example, the model 300 is stored in a suitable data centre, and/or as part of a cloud computing environment or other distributed environment. The model 300 is accessible via suitable APIs (application programming interfaces), for example over a network.

The system 100 interfaces with the model 300 by providing inputs to the model 300 and receiving responses. In text processing examples, the input may be referred to as a prompt, and includes instructions that, when processed by the model 300, cause the model 300 to provide a desired response.

In some examples, the model 300 is configured to receive text as input and generate text in response. Accordingly, in this context, instructions to be processed by the model 300 refer to instructions provided in a natural language (e.g. in English) that can be received as input by the model 300 and processed thereby. The instructions may generally comprise a textual explanation of the task and the form of the desired response. The instructions may comprise further contextual information that assists the model 300 in performing the task, such as a description of a persona to adopt, a description of relevant rules or conventions required to provide the output. In some examples, the input may also comprise one or more training examples, referred to as shots.

The process of constructing (or generating) the input may include retrieving one or more strings from the storage 140, such as template text. Template prompts may be referred to as metaprompts or system prompts, as distinct from prompts typed on-the-fly by users. The process may also comprise generating one or more strings, for example by converting data extracted from the storage 140 into strings. The resulting strings can then be concatenated or otherwise combined to form the prompt. For example, each string may be loaded into memory, and combined to form a larger string comprising the prompt. The prompt is then stored in memory (e.g., in volatile memory) before being transmitted to the model 300, e.g., via an API call.

The response received from the model 300 may also be in the form of text. The system 100 is configured to extract relevant data from the response, e.g. by extracting suitable substrings from the string of text.

The network connection between client device 200 and computer system 100 encompasses any suitable network connection, including wired and wireless links, local and wide area networks, and including the internet. The same applies in respect of the connection between computer system and generative Al model 300.

The computer system 100 is particularly configured to serve web pages that enable the user of the client device 200 to provide an input, which is then in turn be passed to the generative Al model 300. Furthermore, the computer system 100 is configured to serve web pages including the response received from the generative Al model 300. Accordingly, the system 100 acts as a web interface or web application for the generative Al model 300.

In the description that follows, the term input query is used for convenience to refer to the input to the model 300 which serves as the basis of the response provided by the model 300, but it will be understood that the input need not be a "query" in the sense of a question, but can include a direct instruction, command, request or any other suitable input that can be processed by a generative machine learning model such as model 300.

The input query may be in the form of text. Similarly, the response received from the generative Al model 300, and thus provided to the client device 200, may be text. For convenience, in the description that follows text input and output is assumed to be text, and so the generative Al model 300 is a language model, such as the LLMs or SLMs described above. However, it will be understood that the present disclosure applies to a wide range of input and output modalities.

Turning to the components of system 100 in more detail, the system 100 comprises an options generator 110, rendering engine 120, query executor 130 and storage 140. The system 100 may also optionally comprise a history component 150, discussed later.

The options generator 110 is configured to receive the query and, using the generative Al model 300, generate definitions of GUI components. Particularly, the options generator is configured to generate an input (e.g. a prompt) for the generative Al model 300 comprising the query, along with instructions, which when executed by the generative Al model 300 cause the model 300 to provide in response the definitions of the GUI components. The definitions correspond to GUI components that comprise input means (e.g. checkboxes, radio buttons, textboxes and the like) for receiving user input for refining the input query. The definitions are according to a predefined schema, for example in the form of a domain specific language (DSL).

The rendering engine 120 is configured to receive the generated definitions from the model 300, parse the received definitions and generate executable code for rendering the defined GUI components.

The rendering engine 120 is furthermore configured to provide the executable code to client device 200, such that it can be executed and rendered by the client device 200. In the context of a web application, this may involve generating suitable executable Javascript (e.g. React.js code), HTML elements or the like.

The query executor 130 is configured to receive the user input refining the query, and generate an input for the generative Al model 300 (e.g. a prompt) comprising the query and data representative of the user input refining the query. The query executor 130 is then configured to provide the input to the model 300, and in response receive a response to the query. The system 100 may then render the response (e.g. by generating suitable webpages or parts thereof for rendering by the client device 200).

The storage 140 is configured to store, transiently or permanently, any data or instructions to carry out any of the methods or functionality discussed herein. It may comprise volatile and/or non-volatile memory.

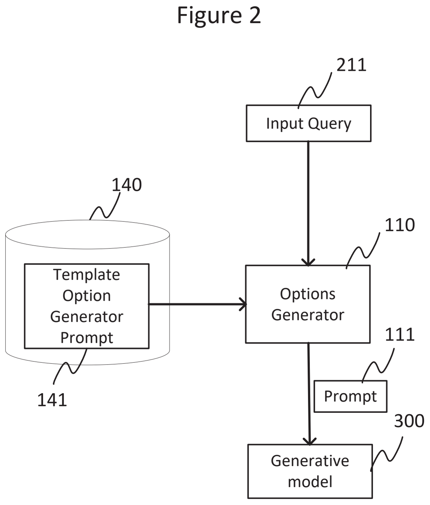

FIG. 2 illustrates the options generator 110 in more detail. The options generator 110 is configured to receive an input query 211, for example from the user device 200, and generate a prompt 111 for the model 300 that causes the model 300 to return definitions of GUI components in the DSL. Accordingly, the prompt 111 comprises instructions that cause the model 300 to generate the definitions of the GUI components.

It will be understood that, in this context, the model 300 is configured to receive instructions in text form, and thus the instructions in prompt 111 are written at least partially in natural language. The natural language may be enclosed in suitable tags according to a markup language, or may otherwise be structured. In other words, instructions in this context need not be executable instructions in the sense of lines of source code or compiled code.

The options generator 110 is configured to retrieve a template prompt 141 stored in storage, which comprises pre-prepared instructions that cause the model 300 to generate the definitions of the GUI components. The template prompt 141 includes a "slot" into which the query 211 is inserted to complete the prompt 111. In some examples, the template 141 comprises further slots as discussed below. In practice, filling a slot in the template may involve concatenating strings representing the template prompt 141 and the content for the slot (e.g. the query 211).

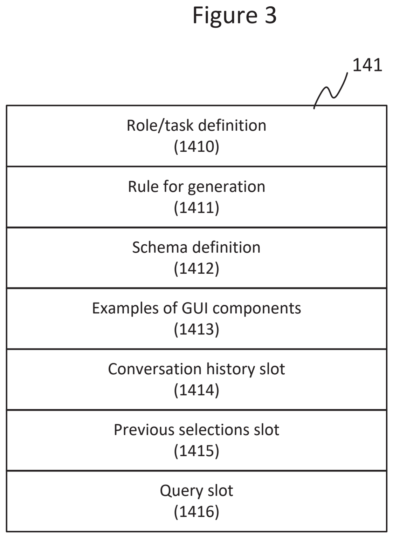

Turning to FIG. 3, a schematic representation of the template prompt 141 is illustrated.

The prompt 141 comprises a role and task definition 1410, which provides instructions setting out the role the model 300 is playing and its task. For example, this may specify that the role is that of an Al chat bot, and the task is that of generating options that would be useful for generating a response, based on the conversation context.

The prompt 141 comprises a set of rules 1411 that guide the generation of the GUI component. One example rule specifies that the model 300 should consider the level of detail and output types that would be relevant for the user. Another example rule specifies the number of GUI components (e.g. between 3 and 5) that should be returned. Other rules may specify that checkbox-type components are suitable when options do not conflict, but radio buttons are suitable when the options are conflicting. Other rules may specify that the options should not be redundant, or that they should not conflict with the user. Other rules may specify that the options should be arranged such that broader options are presented before narrower options. It will be understood that these are merely illustrative example rules, and other relevant rules may be specified or selected according to design preferences or needs.

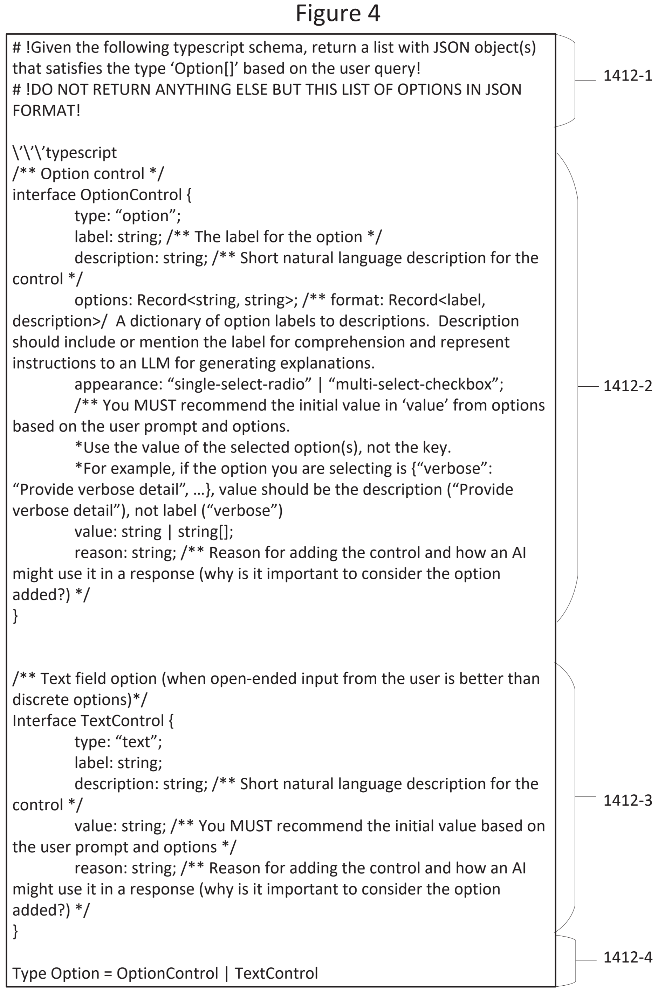

The prompt further comprises a schema definition 1412, which defines the structure of the definitions of the GUI components. FIG. 4 illustrates an example schema definition in more detail.

The example schema definition 1412 sets out a definition of the structured output the model 300 is to provide. The definition 1412 comprises instructions 1412-1 that state the general format of the schema definition. For example, instructions 1412-1 specify that the schema is a typescript schema, and that only JSON (Javascript Object Notation) objects should be returned that satisfy the schema should be returned.

The definition furthermore comprises a definition of a first GUI component 1412-2. The definition 1412-2 defines an OptionControl element, with a plurality of fields and their associated descriptions. The fields include a type, which has a predetermined value of "option" for the OptionControl element. The fields include a label, which provides a reference name for the component. The fields include a description, which provides a short natural language description for the component, which is suitable for rendering in the user interface to aid the user's comprehension. The fields include an options field, which has the format of dictionary of option labels and accompanying description. The fields include an appearance field, which has two possible values that respectively correspond to either a radio button component and a checkbox component. The fields include a value field, which is a default selected value for the GUI component. Finally, the definition includes a reason field, which is filled with a suitable reason for adding this GUI component. The reason field need not be displayed to the user, but asking the model 300 to explain its reasoning can in some circumstances lead to more accurate output.

The definition also comprises a definition of a second GUI component 1412-3. The second GUI component 1412-3 may be a TextControl component, defining a text input GUI component. Again, the definition of the component comprises a plurality of fields. These include a type field, which in this instance is filled with a predetermined value of "text". The fields may also include a label, description, value and reason similar in structure and purpose to the fields defined in relation to the OptionControl component. The definition of the second GUI component omits the options and appearance fields on the basis that it does not include predetermined options and there is only a single appearance possible for a text box.

The schema definition 1412 furthermore includes a type definition 1412-4 that states that the type Option is either an OptionControl or a TextControl.

It will be understood that this schema is merely one example of a possible schema for defining GUI components. The schema may be extended to include different types of GUI components, such as sliders, drop down lists, toggle switches, buttons and so on. Furthermore, the schema can be defined in some other suitable format different from the typescript and JSON format illustrated. Other examples include XML or other markup languages such as YAML.

Returning to FIG. 3 the prompt template also includes examples 1413 of GUI components defined according to the schema, to assist the model 300 in correctly generating output compliant with the schema. In one example, two examples are provided, but it will be appreciated that this may be varied.

The prompt template further includes a slot 1414 for inserting conversation history. The conversation history comprises previous input queries and the responses generated based thereon. Of course, if the input query is the first query in a conversation or other ongoing interaction, there will be no relevant conversation history.

The prompt template further includes a slot 1415 for inserting details of any previously selected options. These may be options from GUI components generated as a result of a previous iteration of the process, or as discussed in more detail below these may be selected options that persist across a whole session, referred to as static options, and thus apply in respect of all options and responses generated.

Finally, the prompt template includes a slot 1416 for inserting the input query.

It will be understood that this is merely an example of a suitable structure for the template prompt 141. In other examples, further content is added to the template prompt or some of the content discussed above is omitted. For example, the examples 1413 of the GUI components may be omitted, and/or the conversation history to be included in slot 1414 may be omitted. Equally, the order of the elements of the prompt 141 may be varied. In general, the requirement is that the content of the prompt 141 reliably generates suitable options for refining the input query, and returns those options in format that is compliant with the defined schema. It will be understood that a wide variety of particular formulations of the prompt 141 may achieve this aim.

In another example, the schema definition 1412 may also be a slot in the template prompt 141, into which a suitable schema definition 1412 may be inserted. Accordingly, different schema definitions 1412 can be provided that include different definitions of GUI components. For example, one schema definition may exclude the definition of a particular component - e.g. the text box - or a particular option of a particular component - e.g. the radio buttons option in the OptionControl. Accordingly, as such components or options are not part of the schema definition, components or options of that type will not be generated by the model 300.

By inserting different schema definitions 1412 into the slot, different user preferences or developer preferences may be accommodated. For example, in one application, it may be preferable to have the model 300 only generate mutually exclusive options, so that radio buttons are included in the schema definition but checkboxes are not. In other examples, the user may have a preference for not entering further text and thus provide input (e.g. select a setting) that causes a schema definition to be inserted excludes textboxes.

In addition, it may also be the case that different template prompts 141 are stored in storage 140, and a selection is made amongst the template prompts 141, for example based on a configuration value or user setting. That is to say, rather than filling slots with different schema definitions 1412 at runtime, various template prompts 141 may be stored including different schema definitions. The same may be true where it is desirable to select different examples of GUI component definitions, provide different rules and the like.

As illustrated in FIG. 2, the prompt 111 when constructed is input to the model 300. Subsequently, as illustrated in FIG. 1, the model 300 returns the definitions of the GUI components which are provided to rendering engine 120.

By generating options in the format of defined GUI components according to the schema, a variety of potential rendering engines 120 may be implemented depending on the platform, so as to appropriately render the components. So long as they rendering engine 120 is able to interpret the definitions in the schema language and cause the rendering thereof, the particular details of the rendering engine may differ. This opens up the possibility of implementing different rendering engines for different operating systems or context, such as one rendering engine for web applications (as in the present context) and another for a native application running directly on a particular operating system.

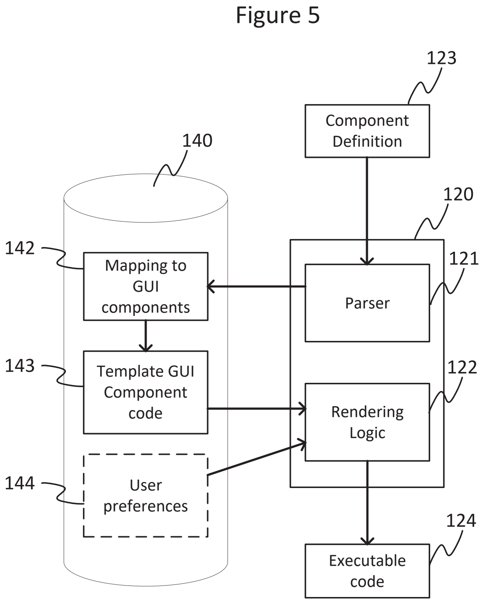

FIG. 5 shows the rendering engine 120 in more detail. The rendering engine 120 comprises a parser 121, which is configured to parse the input definition 123 of a GUI component. The parser 121 interacts with a stored mapping 142, which provides a mapping between a GUI component defined in the schema and suitable stored template executable code 143 for rendering the component. The template executable code 143 is also stored in the storage 140. For example, the parser 121 identifies that the defined component is a radio button control, and use the mapping 142 to retrieve template executable code for rendering a radio button. Similarly, the parser 121 may identify that the defined component is a text box, and use the mapping 142 to retrieve template executable code 143 for rendering a text box.

For example, the template executable code 143 for each possible GUI component comprises a plurality of input parameters, which correspond to fields of the definition. For example, these include the description, the values of the options, and the default selected option. The rendering engine 120 provides the retrieved template executable code 143 and the relevant input parameters to rendering logic 122, which generates executable code 124 for rendering the GUI component.

It may be the case that the rendering logic 122 effectively fills slots in the retrieved template code with the input parameters parsed from the definition, in a similar way to the slots are filled in the prompt 141 discussed above.

The rendering logic 122 may also take in other parameters that are representative of options or user preferences 144 in the rendering process. The user preferences 144 are stored in storage 140. For example, if the user has selected an accessibility or high-contrast display mode, or a particular colour scheme or theme, this is provided as a parameter to the rendering logic 122 which accordingly generates the executable code 124 taking account of the parameters.

In the present example of a web application, the output of the rendering logic 122 is executable code that forms part of a webpage, and therefore can be executed in the web browser 210 of the client device 200 when transmitted thereto. In one example, the executable code is in the form of suitable Javascript for execution by the web browser 210. For example, the rendering engine 122 makes use of the React.js rendering library. In other examples, the rendering engine 122 generates Python code or any other suitable code which when executed renders the relevant component on a display.

In some examples, the rendering engine 120 is configured to render the defined GUI components incrementally upon receipt from the model 300. Particularly, the model 300 returns the response to the system 100 sequentially, a token at a time as it generates the tokens forming the response. It may take a relatively long time to generate each definition of a GUI component, especially in examples where the model 300 is remotely hosted, for example in the order of 1 or 2 seconds per GUI component. Accordingly, rather than waiting for a complete response comprising all the GUI components and then passing a list of all the GUI components to the rendering engine 120, the system 100 is configured to pass each definition as it is received to the rendering engine 120, which in response generates the executable code 124 corresponding to that component. In turn, the generated executable code 124 is caused to be rendered by the client device 200.

In some examples, the rendering engine 120 operates on the basis of one entire definition received, rendering (or generating code that renders) that whole definition. However, in some cases it the rendering engine 120 is configured to begin rendering the component before the entire definition of the component is received, e.g. by first rendering the description if it is received before the options.

In this way, the user is presented rapidly with the options, rather than experiencing a relatively long delay caused by waiting on the model 300 to complete its entire response.

As noted above, the schema definition 1412 provided in the template prompt 141 may be varied, to effectively constrain the types of GUI component definition that the model 300 generates. Accordingly, it may be the case that the rendering engine 120 is able to render a plurality of possible GUI components based on the possible input schema definitions 1412 that may be used, but that the selected schema definition 1412 provided to the model 300 results in generation of only a subset of those possible GUI components. Put differently, the rendering engine 120 is compatible with (i.e. able to parse) the definitions that are output by the model 300, but may also be able to parse other definitions that are not included in the particular schema definition in use.

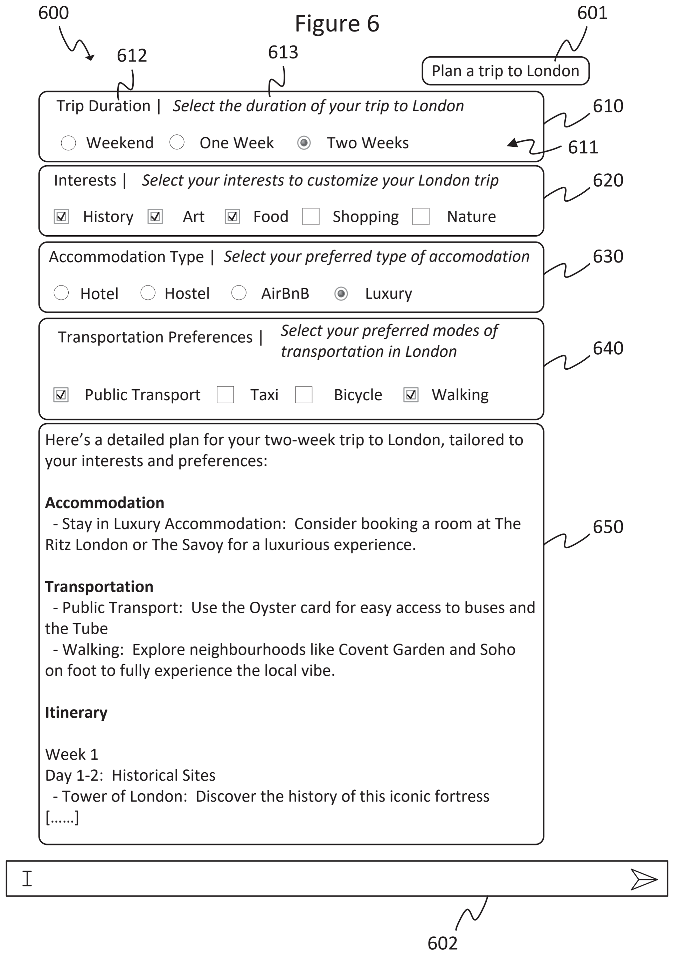

FIG. 6 shows an example user interface 600 that is rendered on the client device 200. The example user interface shows an input query 601, which has been entered by the user of the device 200 via text box 602. The input query 601 in this example is "Plan a trip to london". The input query 601 has been received by system 100 from device 200, for example by transmission in a suitable message (e.g. HTTP POST or some other suitable mechanism). In the manner described above, the system 100 has generated and rendered respective GUI components 610, 620, 630, 640 for refining the input query 601.

The GUI component 610 is a radio button component, with options 611 for selecting the duration of the trip. The label 612 is "trip duration" and the description 613 is "Select the duration of your trip to London". The options 611 are "Weekend", "One Week", "Two Weeks".

The GUI component 620 is a checkbox component, with options for specifying the user's interest. The label is "Interests" and the description is "Select interests for the trip". The options are "History", "Art", "Food", "Shopping" and "Nature". It will be appreciated that the label, descriptions and options of component 620 are not labelled to preserve the clarity of the figure.

GUI components 630 and 640 are similarly respectively radio button and checkbox GUI components, for selecting accommodation type and transport preferences.

Each of the GUI components 610-640 are configured to receive user input from the user of device 200, so as to select options for refining the input query 601. Each component 610-640 may have a default value, as returned by the model 300 and defined above, which may be initially selected.

Although not illustrated, each component 610-640 may comprise an input means for deleting the component 610 (e.g. a suitable input button, for example having a trash can icon). This then removes the component from the interface 600, and also removes any selected option therein from consideration in the response 133 discussed below.

The client device 200 may transmit data representative of the selections made to system 100. For example, the executable code defining the GUI components may comprise logic that, upon selection of an option or input of text to a text box, generates a suitable message that conveys the selection to the system 100.

The example dynamically generated GUI components 610-640 are merely example components generated from one example query. It will be appreciated that different queries will result in the generation of different GUI components 610-640 that present options relevant for refining the respective queries.

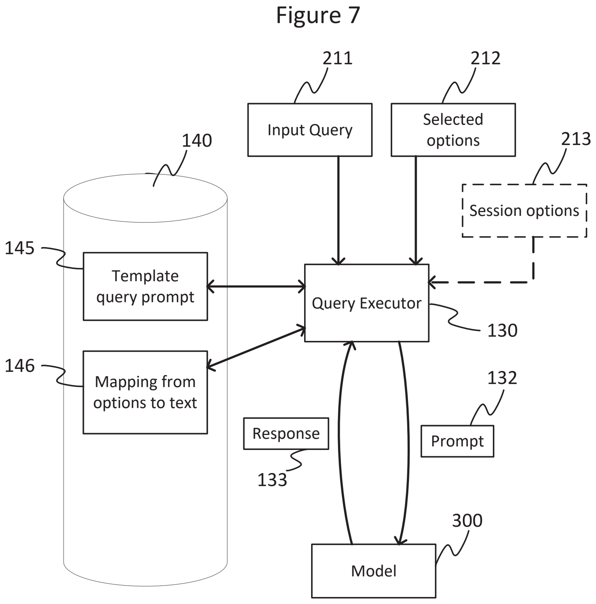

FIG. 7 illustrates the query executor 130 in more detail. The query executor 130 is configured to generate an input for model 300 comprising the input query 211 and the selected options 212 of the GUI components 610-640. The query executor 130 is configured to retrieve another template prompt 145 stored in storage 140, which comprises instructions, which when processed by the model 300, cause the model 300 to generate a response to the query 211 which takes account of the selected options. In a similar manner to discussed above, the template prompt 145 may include slots that are filled with the query 211 and text based on the selected options 212.

The query executor 130 accesses a stored mapping 146 between a selected option 212 and text for inclusion in the slot of the prompt 145. For example, the definition of the GUI component returned by model 300 may include associated text which can be readily included in the prompt 145. This may be stored as a mapping 146 upon receipt of the definition, and then later relied on to retrieve the associated text. For example, the text associated with the selection of "Weekend" may be "The duration of the trip is a weekend". In other examples, suitable natural language processing tools may be used to generate the text for inclusion in the slot of the prompt 145, for example from the label and/or description field of the GUI element definition and the label and/or description of the selected option. In further examples, the text associated with a selection may simply be the label and/or description field of the GUI element definition and the label and/or description of the selected option.

Accordingly, the selected options 212 form the basis of grounding data for inclusion in the template prompt 145 with the input query 211.

The template prompt 145 may include a variety of other suitable information and instructions, including definitions of the persona or role the model 300 should adopt, rules governing the content or format of the response and so on.

The template prompt 145, once generated, is provided as input to the model 300, illustrated by reference numeral 132. In turn, the model 300 provides a response 133 including an answer to the input query 211.

The system 100 then renders the response 133. Returning to FIG. 6, an example response 650 is shown being rendered on client device 200. In this example, the response 650 is a detailed itinerary for a trip to London, based on the selected options from GUI components 610-640. Only a portion of the response 650 is illustrated, to improve the clarity of the figure, but it will be appreciated that the actual response includes the entirety of a detailed itinerary.

In one example, the query executor 130 is configured to generate the prompt 132 and render the associated response 133/650 based on the default options selected in components 610-640. That is to say, the user may be automatically presented with a first response 650 based on the default options selected.

In response to the selection of different options in any of components 610-640, the query executor 130 may re-generate the prompt 132 based on the selected options 212 and cause generation of another response 133 based on the newly selected options. This may be repeated each time a different selection of options 212 is made. The new response 133 may replace the previously displayed response in the interface.

In other examples, the initial response 133 may not be generated and displayed until the user has selected options from components 610-640.

Although not illustrated in FIG. 6, the process described may repeat, with the user providing a second query (which may or may not be related to the query 601), and the system 100 generating and causing rendering of another corresponding set of GUI components for refining the second query. This may continue to repeat in a "chatbot" style interaction, with the user repeatedly providing queries that are answered with responses refined via GUI component selections.

FIG. 7 also illustrates that the input to the query executor 130 may include session options 213. Whilst options 212 are specific to a particular input query the system 100 may also permit the user to provide input that causes generation of GUI components for specifying options that apply to the entire session. These are referred to herein as session options 213. The session options 213 can be used to provide additional grounding to model 300 for use in generating the response 133. In addition, they may also be included in prompt 111, so that the GUI components generated in response to user query also take into account the session options 213.

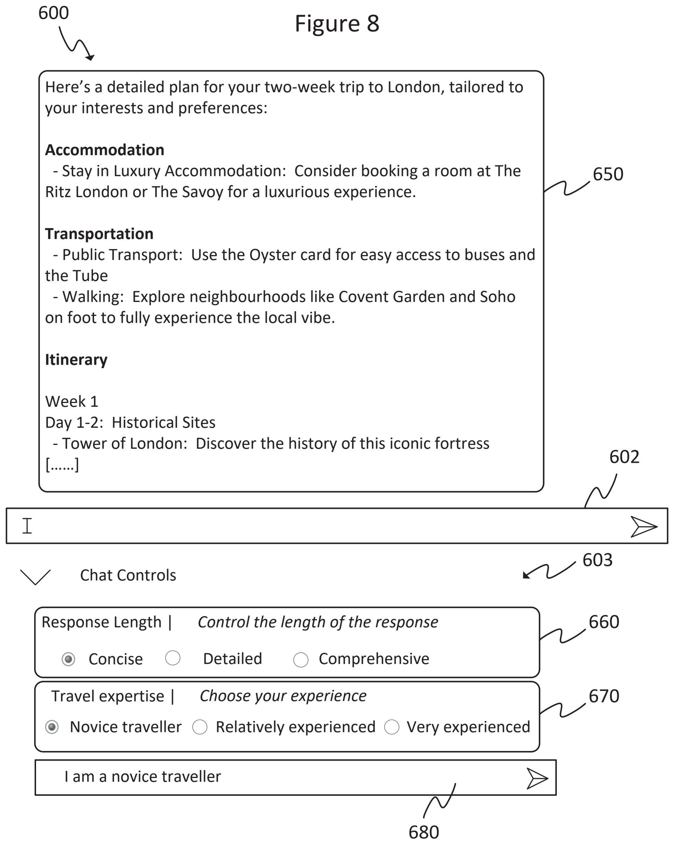

FIG. 8 illustrates an example of another part of user interface 600 for selecting session options. The user interface 600 comprises a further section 603, which in the illustrated example is place under query input box 602, in an expandable section.

The section 603 includes a further text box 680, which is configured to receive user input that causes generation of GUI components 660, 670 for selecting the session options 213. In the figure, the text box 680 is shown with input "I am a novice traveller", which when input causes the generation of component 670, which includes options for selecting the experience of the traveller. The option "novice traveller" is selected by default, in line with the user's input.

The component 660 has been previously generated in response to user input to text box 680 such as "I want to control the length of the response".

Each of GUI components 660-670 is generated using model 300 based on the input to text box 680, in a similar manner to the components 610-640 discussed above. Another template prompt may be used, which is tailored to the generation of session options.

Another manner of specifying session options may be to "pin" one of the components 610-640 discussed above, so that it applies to all responses 133. For example, although not illustrated in FIG. 6, each component 610-640 may include a pin button or other similar input means that allows the user to select that component as a session option.

Although in the illustrated example, the GUI components 660-670 are generated by the model 300, in other examples, session options may be specified in other ways. For example, stored (rather than model-generated) sets of options may be rendered for selection. This may be appropriate for common options (e.g. response length) which are likely to apply in a wide range of settings.

In still further examples, the system 100 may save the session options (e.g. by storing them in storage 140), so that they can be retrieved for use in future sessions.

It will be understood that this is only one possible arrangement of the user interface 600 for specifying session options 213. In other examples, a separate user interface may be rendered for specifying session options, or the section of the user interface 603 may be located elsewhere (e.g. in a pop-up, sidebar or above the main chat interface shown in FIG. 6).

Returning to FIG. 1, the system 100 may comprise a history component 150, configured to interact with a history of previous inputs and corresponding responses stored in storage 140. In one implementation, this may act as a cache of previous inputs and their associated responses. Accordingly, if an input is provided that is identical to one already submitted to model 300 - i.e. because the same options are provided, the stored corresponding response can be retrieved without needing to call the model 300.

In other examples, the storage 140 stores responses associated selected options. The history component 150 is configured to access the stored responses, so as to permit a comparison thereof. This enables the user to visualize the impact of particular selected options on the model 300 output.

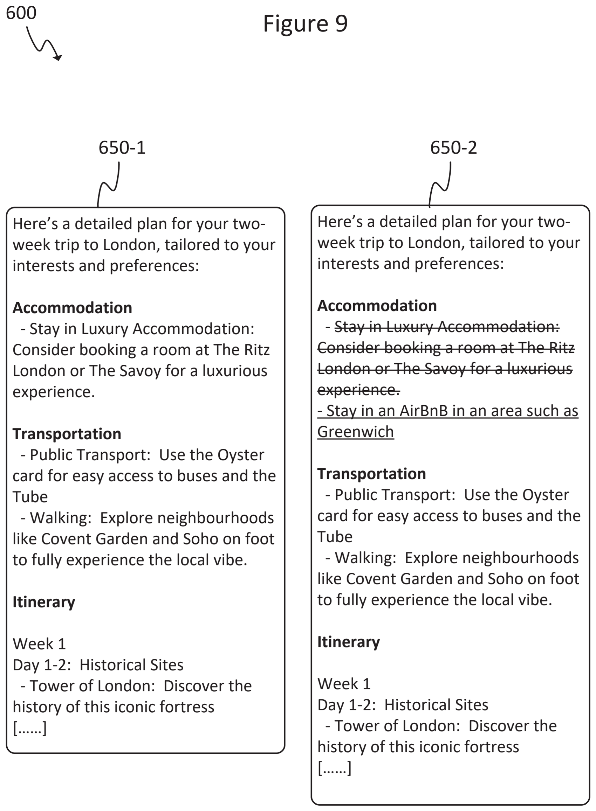

FIG. 9 illustrates an example user interface 600 showing a comparison of two responses. The first response 650-1 corresponds to the response 650 discussed above. The second response 650-2 corresponds to a response generated if "AirBnB" rather than "Luxury" is selected in component 630. The difference in selected option elicits a different response from the model 300. The differences between the two responses may be highlighted, for example with additions shown in underline and deletions shown in strikethrough.

In one example, the history component 150 may maintain a history tree structure of responses. For example, if the inputs and responses are a list, the selection of different options that engenders a different response causes a branch of the tree to be formed. The history component 150 can then facilitate comparison of responses in different branches of the tree.

The examples discussed above pertain to text input and output, but the concepts equally apply to other modalities of input and output. For example, the model 300 may be a model 300 configured to generate images, wherein the GUI components refine the input to the model 300 so as to control the generated image output. In a similar manner, the model 300 may be a video generation model, audio generation model, code generation model, 3D model generation model or the like. In these examples, the input query may be refined to provide improved output. Furthermore, the input to the model is not restricted to text. For example, the input may comprise audio, images, video, documents, code or any other suitable input processable by the model. The model may be multimodal, in the sense that it is able to accept input comprising different (and possibly multiple) modalities and/or provide output comprising different (and possibly multiple) modalities.

In the examples discussed above, one model 300 is discussed, but it will be appreciated that different models may be employed for different parts of the process. For example, one model may be used to generate the GUI component definitions, and another model may be used to provide the response to the refined query. In addition, the models used need not be hosted remotely from the system 100, but could instead be stored locally. In one particular example, a local model may be used to generate the GUI component definitions, and a remote model may be used to provide the response to the refined query. In addition to LLMs, SLMs (or similar equivalent models for different modalities) may be applied. For example, a locally-stored SLM (e.g. Phi-3) or LLM may be used to generate the GUI component definitions.

In some examples, the SLM or LLM may be specifically trained or fine-tuned for the purpose of generating GUI component definitions. Equally, other machine learning models specifically trained to generate GUI component definitions may be employed. Such models may take the query as an input parameter, but need not be capable of processing entire prompts in the sense discussed above.

The disclosure also extends to systems and methods that incorporate the model(s) 300 and/or the client device 200.

While the above examples focus on a web application environment, it will be understood that the disclosure applies equally to other applications. For example, the application may run natively on an operating system rather than in a browser, with GUI components rendered by suitable rendering libraries. Example rendering libraries for a Windows^{®} environment include WinForms, Windows Presentation Foundation, Qt, GTK, Tkinter and so on. Similar libraries are available for Mac OS, Linux and mobile operating systems such as iOS and Android.

Whilst the examples illustrate queries relating to travel planning, it will be explicitly understood that the queries may be for use in a variety of technical tasks. For example, the queries may be for troubleshooting machinery or computer systems, debugging code, answering medical queries, answering queries provided by a security analyst in the context of a cybersecurity system and so on.

Whilst in the above examples, the user is implicitly a human user, in other examples, the "user" may be an automated agent. In such examples, the automated agent may interact with a rendered user interface components that are not necessarily displayed on a screen or other interface. That is to say, the automated agent may be capable of interacting "internally" with rendered components without necessarily displaying them.

Furthermore, whilst the examples illustrate a user providing the query (e.g. by a text box, but equally via audio or some other medium), in other examples the query may be machine generated. For example, an input query may be inferred from user activities, or stored as part of an automated workflow or the like.

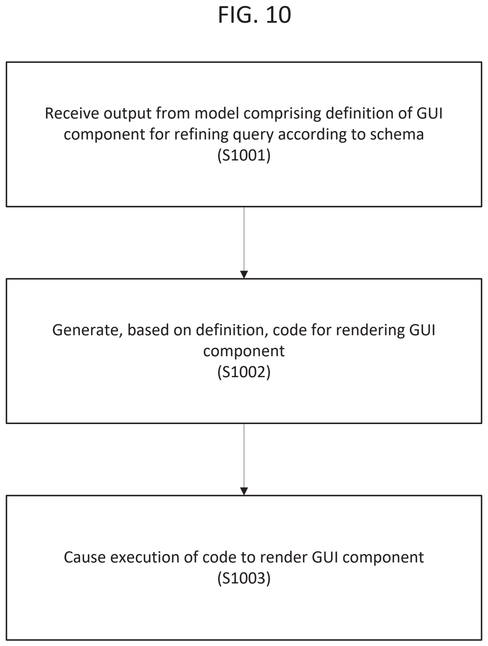

FIG. 10 is a flowchart of an example method. In a first step S1001, output from a generative Al model is received that comprises a definition of a GUI component for refining an input for a generative machine learning model. The definition is according to a predefined schema. In some examples, the generation of the output is caused by providing an input to the generative model, for example in the manner set out above with reference to options generator 110.

In a second step S1002, code for rendering a GUI component is generated based on the received definition. In some examples, the code is generated in manner set out above with reference to rendering engine 120.

In a third step S1003, the method causes execution of the code, so as to render the GUI component. This may involve transmitting code to a client device 200 for execution and rendering in a web browser 210. It may also include rendering the component on a display attached to the system 100, for example using a suitable library for natively rendering a GUI within an operating system.

The method may comprise further steps, as discussed herein.

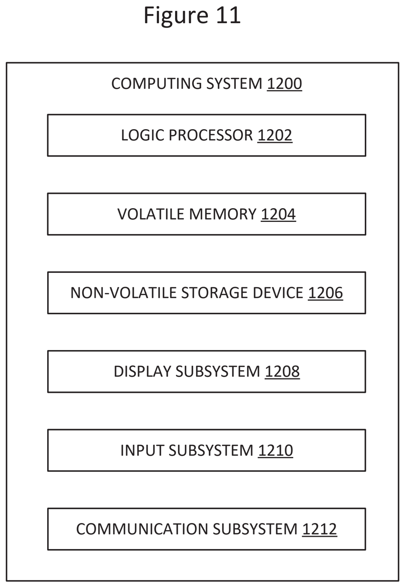

FIG. 11 schematically shows a non-limiting example of a computing system 1200 that can enact one or more of the methods and processes described above. Computing system 1200 is shown in simplified form. Computing system 1200 may embody any of the computer devices 100, 200, 301 described above, or any other computer device discussed herein. Computing system 1200 may take the form of one or more personal computers, server computers, tablet computers, home-entertainment computers, network computing devices, gaming devices, mobile computing devices, mobile communication devices (e.g., smart phone), and/or other computing devices, and wearable computing devices such as smart wristwatches and head mounted augmented reality devices.

Computing system 1200 includes a logic processor 1202, volatile memory 1204, and a non-volatile storage device 1206. Computing system 1200 optionally includes a display subsystem 1208, input subsystem 1210, communication subsystem 1212, and/or other components not shown in FIG. 11.

Logic processor 1202 includes one or more physical devices configured to execute instructions. For example, the logic processor is configured to execute instructions that are part of one or more applications, programs, routines, libraries, objects, components, data structures, or other logical constructs. Such instructions may be implemented to perform a task, implement a data type, transform the state of one or more components, achieve a technical effect, or otherwise arrive at a desired result.

The logic processor includes one or more physical processors (hardware) configured to execute software instructions. Additionally or alternatively, the logic processor includes one or more hardware logic circuits or firmware devices configured to execute hardware-implemented logic or firmware instructions. Processors of the logic processor 1202 may be single-core or multi-core, and the instructions executed thereon may be configured for sequential, parallel, and/or distributed processing. Individual components of the logic processor optionally are distributed among two or more separate devices, which may be remotely located and/or configured for coordinated processing. In examples, aspects of the logic processor are virtualized and executed by remotely accessible, networked computing devices configured in a cloud-computing configuration. In such a case, these virtualized aspects are run on different physical logic processors of various different machines, it will be understood.

Non-volatile storage device 1206 includes one or more physical devices configured to hold instructions executable by the logic processors to implement the methods and processes described herein. When such methods and processes are implemented, the state of non-volatile storage device 1206 may be transformed - e.g., to hold different data.

Non-volatile storage device 1206 may include physical devices that are removable and/or built-in. Non-volatile storage device 1206 includes any of optical memory (e g., CD, DVD, HD-DVD, Blu-Ray Disc, etc), semiconductor memory (e g., ROM, EPROM, EEPROM, FLASH memory, etc.), and/or magnetic memory (e.g., hard-disk drive), or other mass storage device technology. Non volatile storage device 1206 includes any of nonvolatile, dynamic, static, read/write, read-only, sequential-access, location-addressable, file-addressable, and/or content-addressable devices. It will be appreciated that non-volatile storage device 1206 is configured to hold instructions even when power is cut to the non-volatile storage device 1206.

Volatile memory 1204 may include physical devices that include random access memory. Volatile memory 1204 is typically utilized by logic processor 1202 to temporarily store information during processing of software instructions. It will be appreciated that volatile memory 1204 typically does not continue to store instructions when power is cut to the volatile memory 1204.

Aspects of logic processor 1202, volatile memory 1204, and non-volatile storage device 1206 may be integrated together into one or more hardware-logic components. Such hardware-logic components include, for example, field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

The terms "module," "program," and "engine" may be used to describe an aspect of computing system 1200 typically implemented in software by a processor to perform a particular function using portions of volatile memory, which function involves transformative processing that specially configures the processor to perform the function. Thus, a module, program, or engine can be instantiated via logic processor 1202 executing instructions held by non-volatile storage device 1206, using portions of volatile memory 1204. It will be understood that different modules, programs, and/or engines can be instantiated from the same application, service, code block, object, library, routine, API, function, etc. Likewise, the same module, program, and/or engine can be instantiated by different applications, services, code blocks, objects, routines, APIs, functions, etc. The terms "module," "program," and "engine" can encompass individual or groups of executable files, data files, libraries, drivers, scripts, database records, etc.

When included, display subsystem 1208 can be used to present a visual representation of data held by non-volatile storage device 1406. The visual representation takes the form of a graphical user interface (GUI). Because the herein described methods and processes change the data held by the non-volatile storage device, and thus transform the state of the non-volatile storage device, the state of display subsystem 1208 may likewise be transformed to visually represent changes in the underlying data. In examples, display subsystem 1208 includes one or more display devices utilizing virtually any type of technology. Such display devices can be combined with logic processor 1202, volatile memory 1204, and/or non-volatile storage device 1206 in a shared enclosure, or such display devices are peripheral display devices.

When included, input subsystem 1210 comprises or interfaces with one or more user-input devices such as a keyboard, mouse, touch screen, or game controller. In some examples, the input subsystem comprises or interfaces with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity; and/or any other suitable sensor.

When included, communication subsystem 1212 is configured to communicatively couple various computing devices described herein with each other, and with other devices. Communication subsystem 1212 may include wired and/or wireless communication devices compatible with one or more different communication protocols. As non-limiting examples, the communication subsystem is configured for communication via a wireless telephone network, or a wired or wireless local- or wide-area network. In some examples, the communication subsystem allows computing system 1400 to send and/or receive messages to and/or from other devices via a network such as the internet.

Additional example features of the disclosure are set out below.

According to a first aspect of the disclosure, there is provided a computer-implemented method comprising: receiving, from a first generative machine learning model, an output comprising a definition of a graphical user interface (GUI) component configured to receive user input for refining an input, the definition of the GUI component being according to a predefined schema; generating, based on the definition of the GUI component, executable code for rendering the GUI component; and causing execution of the executable code to render the GUI component.

The input may be an input for a generative machine learning model. The generative machine learning model may be the first generative machine learning model or another generative machine learning model different from the first generative machine learning mode. The model may be an input query, command, instruction or similar. In other words, the input is capable of being provided to the generative machine learning model to engender a response therefrom. References in the optional features and further aspects defined below to the "input query" should be read as if replaced with "input".

The method may comprise receiving data representative of a user input made to the GUI component to refine the input query. The method may comprise generating an input for a second generative machine learning model based on the data representative of the user input and the input query. The method may comprise providing the input to the second generative machine learning model, and in response receiving a response based on the input query. The method may comprise causing rendering of the response.

Generating the input for the second generative machine learning model may comprise retrieving stored text corresponding to the user input and including the text in the input. The stored text may be included in the received definition of the GUI component. Alternatively, the stored text may be generated from one or more of a selected option of the GUI component and a description of the GUI component.

The method may comprise receiving data representative of a second user input made to the GUI component to refine the input query. The method may comprise generating a second input for a second generative machine learning model based on the data representative of the second user input and the input query. The method may comprise providing the second input to the second generative machine learning model, and in response receiving a second response comprising an answer to the input query. The method may comprise causing rendering of the second response.

The method may comprise causing rendering of a difference between the response and the second response. The method may include storing a history of responses received from the second generative machine learning model. The history may comprise a tree, with branches of the tree being representative of different inputs made at the GUI component. The differences between any two responses of the history of responses may be rendered.

The response may comprise one or more of text, images, audio, video or code. The input query may comprise one or more of text, images, audio, video or code.

The method may comprise receiving the input query and generating an input for the first generative machine learning model comprising the input query and GUI component definition generation instructions, which when processed by the first generative machine learning model cause the first generative machine learning model to generate the definition of the GUI component according to the predefined schema. The method may comprise providing the input to the first generative machine learning model. The GUI component definition generation instructions may comprise a definition of the predefined schema. The GUI component definition generation instructions may comprise an example GUI component defined according to the schema.

The predefined schema may define a data structure for representing a GUI component, including one or more of: an appearance of the GUI component, a label for the GUI component, a set of options for the GUI component, and an initial value of the set of options. The GUI component may be one of a checkbox component, a radio button component or a textbox component. The predefined schema may be in Javascript Object Notation (JSON), XML or any other suitable format.

The method may comprise storing a first schema definition corresponding to a first set of GUI components and a second schema definition corresponding to a second set of GUI components. The second set of GUI component definitions may be a subset of the first set of GUI component definitions. The method may comprise selecting one of the first schema definition and second schema definition as the definition of the predefined schema included in the GUI component definition generation instructions.

Generating, based on the definition of the GUI component, executable code for rendering the GUI component may comprise parsing the definition of the GUI component to determine a component type and attributes of the GUI component. The generating may further comprise retrieving template executable code corresponding to the component type; and generating the executable code based on the template executable code and the attributes of the GUI component. The method may also comprise generating the executable code based on stored user preferences.

The method may comprise sequentially receiving a plurality of definitions of GUI components from the first generative machine learning model. For example, one response may be received in increments (e.g. token-by-token) such that a first of the plurality of definitions is received before a second of the plurality of definitions. The method may include, upon receipt of a first of the plurality of definitions of GUI components: generating, based on the definition of the GUI component, executable code for rendering a first GUI component; and causing execution of the executable code to render the first GUI component. The method may include, upon receipt of a second of the plurality of definitions of GUI components: generating, based on the definition of the GUI component, executable code for rendering a second GUI component; and causing execution of the executable code to render the second GUI component. The method may repeat for further definitions received.

The method may comprise storing a session option representative of a refinement for a user query that applies to further queries in a same session. The input for the second generative machine learning model may be further based on the session option.

The method may comprise receiving data representative of a second user input made to the GUI component to designate the user input for refining the query as a session option; and storing the session option based on the data representative of the second user input. The second user input may be user input that pins the GUI component.

The method may comprise: receiving data representative of a user input including a description of the session option; generating an input for the first generative machine learning model comprising the description of the session option and GUI component definition generation instructions, which when processed by the first generative machine learning model cause the first generative machine learning model to generate a definition of a second GUI component according to the predefined schema. The method may comprise receiving, from the first generative machine learning model, the definition of the second GUI component. The method may comprise generating, based on the definition of the second GUI component, executable code for rendering the GUI component and causing execution of the executable code to render the second GUI component. The method may comprise receiving data representative of input made to the second GUI component and storing the session option based on the data representative of input made to the second GUI component.

The method may comprise storing the generated input and the received response; subsequently generating another input for the second machine learning model. In the event that the other input for the second machine learning model matches the generated input, the method may comprise retrieving the received response without providing input to the second machine learning model.

Causing rendering or execution of code herein may refer to directly executing or rendering on the system performing the method, or transmitting data/code that enables rendering on a remote system.

The optional features defined above in relation to the first aspect may be combined in any combination. Accordingly, each sentence in the optional features defined above can be read as if it is a dependent claim referring to the features of any preceding sentence.

According to a second aspect of the disclosure, there is provided a computer system comprising a processor and a memory storing instructions, the instructions when executed by the processor causing the system to carry out the method of the first aspect.

According to a third aspect of the disclosure, there is provided a computer-readable medium comprising instructions, which when executed by a processor cause the processor to carry out the method of the first aspect. The medium is suitably non-transitory and/or tangible.

According to a fourth aspect of the disclosure, there is provided a computer program product comprising instructions which when executed by a processor cause the processor to carry out the method of the first aspect.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A computer-implemented method comprising:
receiving (S1001), from a first generative machine learning model (300), an output comprising a definition (1412) of a graphical user interface, GUI, component (610, 620, 630, 640) configured to receive user input for refining an input (211), the definition of the GUI component (610, 620, 630, 640) being according to a predefined schema;
generating (S1002), based on the definition of the GUI component (610, 620, 630, 640), executable code (124) for rendering the GUI component; and
causing (S1003) execution of the executable code to render the GUI component (610, 620, 630, 640).

2. The method of claim 1, comprising:
receiving data representative of a user input made to the GUI component (610, 620, 630, 640) to refine the input (211);
generating an input for a second generative machine learning model (300) based on the data representative of the user input and the input (211);
providing the input (211) to the second generative machine learning model (300), and in response receiving a response (133) based on the input (211); and
causing rendering of the response (133).

3. The method of claim 2, wherein generating the input for the second generative machine learning model (300) comprises retrieving stored text corresponding to the user input and including the text in the input (211), wherein the stored text is included in the received definition of the GUI component (610, 620, 630, 640).

4. The method of claim 2 or 3, comprising:
receiving data representative of a second user input made to the GUI component (610, 620, 630, 640) to refine the input (211);
generating a second input for a second generative machine learning model (300) based on the data representative of the second user input and the input (211);
providing the second input to the second generative machine learning model (300), and in response receiving a second response comprising a response to the input (211); and
causing rendering of the second response.

5. The method of any of claims 2 to 4, wherein the response comprises one or more of text, images, audio, video or code.

6. The method of any of claims 2 to 5, comprising:
storing a session option (213) representative of a refinement for an input that applies to further queries in a same session;
wherein the input for the second generative machine learning model (300) is further based on the session option (213).

7. The method of claim 6, comprising:
receiving data representative of a second user input made to the GUI component to designate the user input for refining the input (211) as a session option (213); and
storing the session option (213) based on the data representative of the second user input.

8. The method of claim 6 or 7, comprising:
receiving data representative of a user input including a description (680) of the session option (213);
generating an input for the first generative machine learning model (300) comprising the description (680) of the session option (213) and GUI component definition generation instructions, which when processed by the first generative machine learning model (300) cause the first generative machine learning model (300) to generate a definition of a second GUI component (670) according to the predefined schema
receiving, from the first generative machine learning model (300), the definition of the second GUI component (670);
generating, based on the definition of the second GUI component (670), executable code for rendering the GUI component;
causing execution of the executable code to render the second GUI component (670);
receiving data representative of input made to the second GUI component (670);
storing the session option (213) based on the data representative of input made to the second GUI component (670).

9. The method of any preceding claim, comprising:
receiving the input (211);
generating an input for the first generative machine learning model (300) comprising the input (211) and GUI component definition generation instructions, which when processed by the first generative machine learning model (300) cause the first generative machine learning model (300) to generate the definition of the GUI component (610, 620, 630, 640) according to the predefined schema; and
providing the input (211) to the first generative machine learning model (300).

10. The method of claim 9 wherein the GUI component definition generation instructions comprise a definition (1412) of the predefined schema.

11. The method of any preceding claim, wherein the predefined schema defines a data structure for representing a GUI component (610, 620, 630, 640), including one or more of: an appearance of the GUI component, a label for the GUI component, a set of options for the GUI component, and an initial value of the set of options.

12. The method of any preceding claim, wherein the generating, based on the definition of the GUI component (610, 620, 630, 640), executable code (124) for rendering the GUI component (610, 620, 630, 640) comprises:
parsing the definition of the GUI component (610, 620, 630, 640) to determine a component type and attributes of the GUI component (610, 620, 630, 640);
retrieving template executable code (143) corresponding to the component type; and
generating the executable code (124) based on the template executable code (143) and the attributes of the GUI component (610, 620, 630, 640).

13. The method of any preceding claim, comprising:
sequentially receiving a plurality of definitions of GUI components (610, 620, 630, 640) from the first generative machine learning model (300);
upon receipt of a first of the plurality of definitions of GUI components (610, 620, 630, 640):
generating, based on the definition of the GUI component (610, 620, 630, 640), executable code (124) for rendering a first GUI component;
causing execution of the executable code (124) to render the first GUI component;
upon receipt of a second of the plurality of definitions of GUI components (660, 670):
generating, based on the definition of the GUI component (610, 620, 630, 640), executable code for rendering a second GUI component (660,670); and
causing execution of the executable code to render the second GUI component (660,670).

14. A computer system (1200) comprising a processor (1202) and a memory (1204) storing instructions, the instructions when executed by the processor (1202) causing the system (1200) to:
receive (S1001), from a first generative machine learning model (300), an output comprising a definition (1412) of a graphical user interface, GUI, component (610, 620, 630, 640) configured to receive user input for refining an input (211), the definition of the GUI component (610, 620, 630, 640) being according to a predefined schema;
generate (S1002), based on the definition (1412) of the GUI component (610, 620, 630, 640), executable code (124) for rendering the GUI component (610, 620, 630, 640); and
cause execution of the executable code (124) to render the GUI component (610, 620, 630, 640).

15. A non-transitory computer-readable medium comprising instructions, which when executed by a processor (1202), cause the processor (1202) to:
receive (S1001), from a first generative machine learning model (300), an output comprising a definition (1412) of a graphical user interface, GUI, component (610, 620, 630, 640) configured to receive user input for refining an input (211), the definition of the GUI component (610, 620, 630, 640) being according to a predefined schema;
generate (S1002), based on the definition (1412) of the GUI component (610, 620, 630, 640), executable code (124) for rendering the GUI component (610, 620, 630, 640); and
cause execution of the executable code (124) to render the GUI component (610, 620, 630, 640).
